(19) Europäisches Patentamt
European Patent Office
Office européen des brevets

(11) **EP 2 186 360 B1**

(12) **EUROPEAN PATENT SPECIFICATION**

(45) Date of publication and mention
of the grant of the patent:
**17.04.2019 Bulletin 2019/16**

(51) Int Cl.:
*H04W 16/12* (2009.01)    *H04L 5/00* (2006.01)

(21) Application number: **07794213.4**

(22) Date of filing: **03.09.2007**

(86) International application number:
**PCT/SE2007/050608**

(87) International publication number:
**WO 2009/031949 (12.03.2009 Gazette 2009/11)**

(54) **METHOD FOR FREQUENCY PLANNING OF A CELLULAR RADIO SYSTEM WITH IRC**

VERFAHREN ZUR FREQUENZPLANUNG EINES ZELLULÄREN FUNKSYSTEMS MIT IRC

PROCÉDÉ DE PLANIFICATION DES FRÉQUENCES DANS UN SYSTÈME DE RADIOCOMMUNICATIONS CELLULAIRE AVEC IRC

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**19.05.2010 Bulletin 2010/20**

(73) Proprietor: **Telefonaktiebolaget LM Ericsson (publ)**
**164 83 Stockholm (SE)**

(72) Inventors:
• **BJÖRKÉN, Peter**
  **SE-169 40 Solna (SE)**
• **DE BRUIN, Peter**
  **S-954 31 Gammelstad (SE)**
• **KRONESTEDT, Fredric**
  **S-178 34 Ekerö (SE)**

(74) Representative: **Brann AB**
**P.O. Box 3690**
**Drottninggatan 27**
**103 59 Stockholm (SE)**

(56) References cited:
WO-A2-02/13439       US-A1- 2003 026 223
US-A1- 2003 142 640   US-A1- 2006 223 540

• CRAIG S ET AL: "A system performance evaluation of 2-branch interference rejection combining", VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 3, 24 September 2002 (2002-09-24), pages 1887-1891, XP010608757, DOI: DOI:10.1109/VETECF.2002.1040544 ISBN: 978-0-7803-7467-6

• KARLSSON J. AND HEINEGARD J.: 'Interference rejection combining for GSM' UNIVERSAL PERSONAL COMMUNICATIONS, 1996. RECORD., 1996 5TH IEEE INTERNATIONAL CONFERENCE vol. 1, 29 September 1996 - 02 October 1996, pages 433 - 437, XP002053626

**Description**

TECHNICAL FIELD

The present invention relates to a method and a device for assigning frequencies of a frequency plan. In particular the present invention relates to a method and a system for assigning frequencies in a cellular radio system employing some kind of Interference Rejection Combining (IRC) or Interference Cancellation.

BACKGROUND

Enhanced Data rates for GSM Evolution (EDGE) Evolution is currently being standardized in 3GPP Rel-7. The work items include higher order modulation, dual carrier transmission downlink, reduced latency and dual-antenna terminals which in 3GPP is referred to as MSRD - Mobile Station Receive Diversity. A dual-antenna terminal is capable of Interference Rejection Combining (IRC) in the same way as a BTS with receiver diversity. IRC can efficiently suppress interference from a single, dominant co-channel interferer with up to 20 dB. In scenarios with multiple interferers, however, the benefit of IRC is lower.

There are also algorithms for Single Antenna Interference Cancellation (SAIC) that can suppress interference, but with a lower gain. Similar to IRC, one dominant interferer rather than multiple interferers is beneficial also for SAIC. Hereafter, only IRC is used but it should be understood that the basic characteristics are similar, regardless if the interference rejection is done with one or multiple antennas.

Automatic Frequency Planning (AFP) is used by major operators to simplify the frequency planning and achieve low interference in the network. These operators typically have lots of spectrum. The AFP is usually done by smaller companies providing state of the art optimization algorithms.

The optimization in AFP is typically done by assigning costs to different aspects/parameters of the frequency planning. e.g. high co-channel interference can typically be given a very high cost. Thereupon, the total costs for all different aspects/parameters assigned a cost is minimized by a optimization algorithm that varies the different aspects/parameters and finds the global (or local) cost minimum for the area that is frequency planned.

However, existing AFP algorithms only minimize the global interference and will not consider potential benefits of IRC (or SAIC). The AFP optimization might suggest a frequency plan with many moderate interferers instead of a single strong interferer. This will not yield the best performance with EDGE Evolution and IRC.

A solution to utilize IRC without the need for any frequency planning consideration would be to re-use a frequency within a cell and then no AFP changes would be needed. But there are several drawbacks with this solution. For example, the maximum perceived C/I, i.e. after interference rejection, that can be obtained from two equally strong carriers is equal to the maximum level of interference suppression, e.g. at best 20 dB. Even this best case is not sufficient for EDGE today since EDGE can benefit from C/I levels up to around 30 dB and it would be even further below the maximum performance possible with EDGE Evolution.

Also, for legacy reasons, at least three channel groups are needed in the cell, i.e. two for IRC capable mobiles and one for mobiles without IRC. It is not possible to have the same frequency appearing twice in a channel group. Therefore, two groups are needed for IRC mobiles. Without reusing frequencies from own cell, only two channel groups are needed i.e. one for IRC and one without IRC. If the two channel groups used for IRC do not have exactly identical frequencies then this will impact the frequency hopping diversity since the hopping length of each group will be shorter with three compared with two groups per sector. In addition, at least two Training Sequence Codes (TSC) per cell and at least two Hopping Sequence Numbers (HSN) per cell are required, instead of one of each yielding a more complex Hoping Sequence Number/Mobile Allocation Index Offset (HSN/MAIO) planning. Finally, an extra antenna per sector is needed to transmit IRC channel groups on separate antennas.

WO 2002/013439A2 describes a method for frequency planning in a wireless communication network area using an impact matrix.

IEEE, International Conference on "Interferenence Rejection Combining for GSM" by Karls son, J.; Heinegard, J. describes Interference Rejection Combining (IRC) for GSM networks to increase the capacity of digital cellular communication systems in urban areas that have higher interference. Considering the drawbacks outlined above, it is not recommended to re-use the same frequency in a cell compared to allowing a strong interferer from another cell. Hence, there is a problem of how to generate frequency plans that take into account the potential benefits resulting to the introduction of IRC (or SAIC).

SUMMARY

It is an object of the present invention to overcome or at least reduce some of the problems associated with the introduction of IRC (or SAIC) in a cellular radio system.

It is another object of the present invention to provide a method and a device that is capable to generate optimized frequency plans for cellular radio systems employing IRC (or SAIC) techniques.

These objects and others are obtained by the method and device as set out in the appended claims. The method in the appended claims, disclose assigning frequencies in a cellular radio system where the cellular radio system is capable of Interference Rejection Combining, IRC wherein the method further includes collecting data including IRC capabilities related to the cellular radio system, assigning a cost related to a number of interfering interferers, executing a frequency optimization algorithm for determining an assigned cost in relation to the IRC capabilities and the level of interference and assigning frequencies based on the reduced assigned cost.

The device in the appended claims, disclose a device for assigning frequencies in a cellular radio system where the cellular radio system is capable of Interference Rejection Combining, IRC, such that the device comprises means collecting data including IRC capabilities related to the cellular radio system, means for determining Interference Rejection Combining, IRC, capabilities of the cellular radio system, means for assigning a cost related to a number of interfering interferers, means for executing a frequency optimization algorithm for determining an assigned cost in relation to the IRC capabilities and the level of interference, and means for assigning frequencies based on the reduced assigned cost.

Thus by introducing a cost function in an automatic frequency assignment technique, which takes into account the properties of IRC (or SAIC) better frequency planning can be obtained. For example when running an AFP optimization algorithm, the cost for a single strong interferer may be reduced compared to having many moderate interferers.

Using a frequency planning device that includes a cost function reflecting the existence of IRC (or SAIC) in a cellular radio system will allow for frequency planning tools to generate improved frequency plans compared to what is currently possible.

BRIEF DESCRIPTION OF TIIE DRAWINGS

The present invention will now be described in more detail by way of non-limiting examples and with reference to the accompanying drawings in which:

- Fig. 1 is a general view illustrating a tool for assigning frequencies.
- Fig. 2 is a flow chart illustrating a procedure for frequency planning.

DETAILED DESCRIPTION

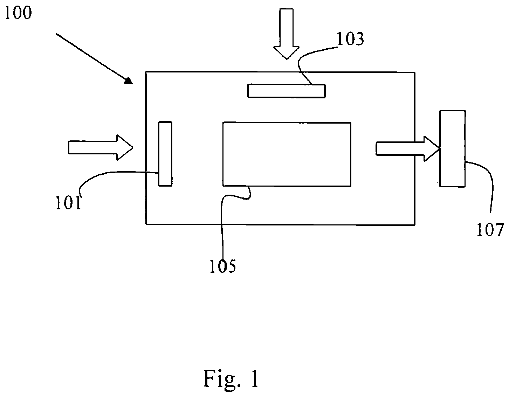

In Fig.1 a general view of a tool 100 used for aiding in frequency planning is shown. The tool comprises an input terminal 101 for receiving data related to the system that an operator is to frequency plan. The tool, 100 also comprises a user input terminal 103 via which terminal 103 a user can input user specific data such as assigning different costs for different interferences, see below. The terminal 103 can also be used for stopping the execution of different optimization procedures executed by the frequency planning tool 100 at different stages as is described more in detail below. The input terminals 101 and 103 are connected to an optimization module 105. The optimization module 105 comprises a computer designed to execute different optimization procedures programmed into the computer in accordance with the input data received from the input terminals 101 and 103. The optimization module 105 is further connected to an output terminal 107. The output terminal 107 can for example be a screen that can be viewed by a user of the tool 100. The output terminal can also be a general data output terminal, or it can be both a screen and a data output terminal.

In order to fully benefit from Interference Rejection Combining (IRC) and Single Antenna Interference Cancellation (SAIC) a cost function is included in the frequency assignment process to enable improved and optimized IRC performance (e.g. for EDGE Evolution). This is obtained by a method where frequency assignment and AFP is based upon IRC capabilities (e.g. from 3GPP).

If the IRC capabilities are not properly taken into account, the frequency assignment and AFP would result in less optimal performance with IRC. Thus in accordance with one embodiment of the present invention an input based upon IRC capabilities (e.g. from the standardized performance in 3GPP) is used in the frequency assignment and AFP optimization.

For example, the AFP algorithm can be adapted to reduce or remove the cost for a single co-channel interferer as compared to having many moderate interferers. In one exemplary embodiment this is done by removing or reducing the cost for interferers to a lower level. e.g. where it corresponds to 20 dB lower interference for single co-channel interferers.

In the frequency assignment procedure the cost for assigning frequencies to a first cell *A* can e.g. be described on a radio level. This means that the total cost for the network is the sum over all radios in the network. The radio cost can be described as:

$$C_{IA} = g_{IA}(f) \qquad\qquad (eq.\ 1)$$

Where:

$C_{IA}$ = the cost of assigning a frequency to a radio 1 of a cell $A$
$g_{IA}(f)$ = the cost function for assigning frequencies to radio 1 of a cell $A$
$f$= Frequency to be assigned to the radio 1 of cell $A$

In accordance with one exemplary embodiment $C_{IA}(f)$ may be calculated as:

$$C_{IA}(f) = P_1 * \sum_{\substack{k=\ all \\ interfering\ cells}} (c_{A,f,k}) - P_2 * max_{\substack{k=\ all \\ interfering\ cells}}(\sum c_{A,f,k}) * (1/G_{IRC}) \qquad (eq.\ 2)$$

Where:

$P_i$ = User configurable priority settings for adjusting the total cost level. For example, the settings may be used to increase cost for a radio, sector or number of sectors relative other radios, sectors or number of sectors.
$c_{Af,k}$ = Interference cost generated on radio 1 when using frequency f in cell $A$ from interfering cell $k$. Note that $c_{Af,k}$ may be the sum of several types of cost functions such as interference cost and neighbor cost. For example, reusing a frequency may cause multiple costs from a reusing sector, i.e., there could be neighbor and interference costs at the same time. In case of IRC, all costs associated with a sector can be set to be affected.
$G_{IRC}$ = Gain from IRC in linear scale, e.g. according to standardized performance in 3GPP. For example, 3 dB means that half of the interference will be removed by IRC. Moreover, $G_{IRC}$ could typically vary and it depends on the interference level and the number of interferers and can e.g. be 20 dB for a single dominant co-channel interferer and typically less for scenarios with multiple interferers. This means that $G_{IRC}$ can be calculated considering the distribution and values of the $(\sum c_{Af,k})$ term.

The second term in the equation 2 above hence reduces the cost in relation to the IRC performance and the level of interference.

In accordance with one embodiment of the present invention. the AFP algorithm can be adapted to consider the benefit of IRC when finding the minimum total cost and thereby achieving a solution which optimizes performance for systems with IRC.

In the second term above as set out in equation 2. the maximum interferer cost for a relation between a target and an interfering sector is reduced by the IRC gain factor. In accordance with one embodiment more than one cost can be reduced depending on the IRC capabilities of the system. For example, in a cellular radio system comprising IRC with three antennas, a maximum of two dominant interferers can be reduced. In such a configuration the formula above can be modified to take this into account, for example by reducing the cost for those dominant interferers to a low value or even zero.

Furthermore, in existing AFP methods, only the downlink is optimized / considered. In some situations the IRC consideration above will have implications also on the uplink performance. The reason is that if a cell is interfered in the downlink it can. at the same time, cause strong uplink interference to the downlink interfering cell. To protect the uplink, the IRC considerations above the maximum term can be set to be applied only if the interfering cell has IRC capabilities at its base station. In that case, the uplink IRC at the downlink interfering cell can remove the uplink interference caused by the downlink interfered cell.

Another aspect of the present invention is that AFP can be used for Training Sequence Code (TSC) planning. TSC planning aims at achieving orthogonal interferers. This is also needed by IRC to identify and be able to suppress interferes. Therefore, the IRC reduction term is preferably not included in TSC optimization since it is desired to identify strong interferers that need a different TSC for proper IRC operation. Hence, the second term ($P_2 *..$) in eq. 2 above is considered when TSC optimizing. Moreover, in accordance with one embodiment of the present invention, the TSC optimization is performed after frequency optimization. The optimized frequency plan usually results in a non-zero interference cost, i.e. it includes frequency reuse (violations) between some sectors. In the TSC optimization only costs between reusing sectors can be considered. The TSC optimization can be used to further reduce the cost by assigning TSC so that reusing sectors use different TSC.

In an exemplary embodiment, two sectors with the same frequencies but with different TSC are given a TSC cost of 0 (i.e. a result of no TSC reuse). Sectors with different frequencies are not given any cost at all since only co or adjacent frequency reuse is of interest for TSC. During the frequency optimization. some costs are not considered due to IRC considerations as above. It is implicitly assumed that different TSC are used for IRC to work accordingly. As a result, the TSC optimization preferably is adapted to consider all available frequency reuse costs/violations and not include an IRC reduction term as above such as the second term of equation 2 above, i.e. the term $(P_2 *..)$ in eq. 2 above.

Typically, input regarding IRC capabilities is needed in the AFP to perform the above steps. The information can for example be which transceivers that will carry IRC capable mobile stations, the IRC channel groups, and which sectors that employ IRC in the uplink at the base stations.

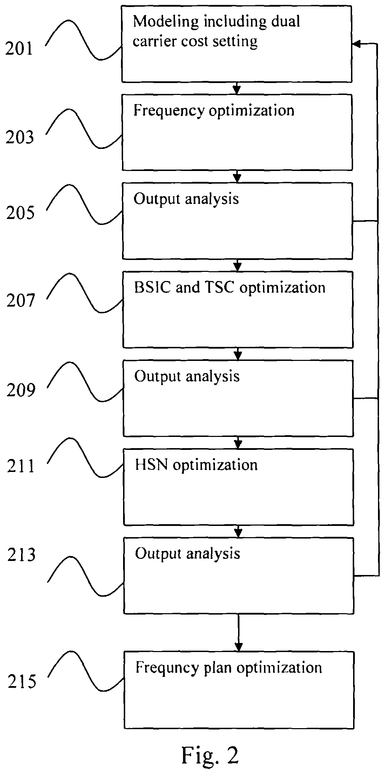

In Fig. 2 a flow chart illustrating a procedure for frequency planning is shown. In a first step 201 data is input and analyzed to ensure that data input is correct. Also a model is constructed. The input data may for example be data related to the site, transceiver data. interference data, hand over data and other data that may be relevant to take into account when frequency planning. In particular data can include IRC capabilities. The model is constructed using the available specified spectrum. Transceivers having similar properties may also be grouped together. For example all BCCH radios may be grouped in one group in order to facilitate allocation of interference costs.

The modeling in step 201 also includes specifying the interference costs and deciding which cost that is o be given the highest cost. Specifying costs is typically an important step which may have to be revisited at later stages during frequency allocation. The allocation of costs may for example have to be revisited if it turns out that an optimized frequency plan has undesired effects. One such example might be that if there is a reuse of frequencies for neighboring cells and such a plan is undesired, the cost for handover violation can be increased. In particular the allocation of cost can includes a cost which takes the IRC capabilities into account. For example any of the methods described hereinabove may be used. In addition user specified parameters such as $P_1$ and $P_2$ in eq. 2 above and GRIC may be specified by a user in step 201.

Next, in a step 203, a frequency optimization algorithm is executed based on the modeling parameters specified in step 201. Thus, the cost including the cost defined by eq. 2 above is calculated using an optimization tool. In a typical optimization tool the cost is displayed to a user on a display such that the user can stop the optimization procedure when the cost is determined to be at a satisfactory level or if the optimization procedure takes too long. If the optimization tool finds a solution that gives a zero cost. i.e. can allocate a frequency to all transceivers without generating any cost, the frequency optimizer stops without involvement from a user. If the optimization tool does not find a solution that generates a zero cost it is typically adapted to try to find a better solution than the one already found.

Next. in a step, 205, when the frequency optimization procedure has been stopped, either because a zero solution is found or because a user or a predetermined threshold level has determined to stop the procedure, the outcome is analyzed. The analyze in step 205 typically involve an analyze of the remaining costs, i.e. the costs that the currently lowest cost as determined by the optimization procedure generates. For example, the analyze may include looking at those remaining costs and determine if they are acceptable or not. If the costs can be accepted the procedure proceeds to a next step 207, else if there are unacceptable costs remaining the frequency optimization procedure in step 203 can be run again, possible with new cost weights for the different interference costs.

In step 207. a Base Station Identity Code (BSIC) and a TSC optimization is performed if the optimization tool finds a solution that gives a zero cost optimizer stops without involvement from a user. If the optimization tool does not find a solution that generates a zero cost it is typically adapted to try to find a better solution than the one already found.

Next, in a step, 209. when the BSIC/TSC optimization procedure has been stopped, either because a zero solution is found or because a user or a predetermined threshold level has determined to stop the procedure, the outcome is analyzed. The analyze in step 209 typically involve an analyze of the remaining costs, i.e. the costs that the currently lowest cost as determined by the optimization procedure generates. For example the analyze may include looking at those remaining costs and determine if they are acceptable or not. If the costs can be accepted the procedure proceeds to a next step 211, else if there are unacceptable costs remaining optimization procedure can be run again, possible with new cost weights set in step 201 for the different interference costs.

Thereupon, in step 211, a Hopping Sequence Number (HSN) optimization code is performed if the optimization tool finds a solution that gives a zero cost optimizer stops without involvement from a user. If the optimization tool does not find a solution that generates a zero cost it is typically adapted to try to find a better solution than the one already found.

Next, in a step. 213. when the HSN optimization procedure has been stopped, either because a zero solution is found or because a user or a predetermined threshold level has determined to stop the procedure, the outcome is analyzed. The analyze in step 211 typically involve an analyze of the remaining costs, i.e. the cost that the currently lowest cost as determined by the optimization procedure generates. For example the analyze may include looking at those remaining costs and determine if they are acceptable or not. If the costs can be accepted the procedure proceeds to a next step 215, else if there are unacceptable costs remaining optimization procedure can be run again, possible with new cost weights set in step 201 for the different interference costs.

Finally. in step 215, the final frequency plan including a frequency plan and BSIC and HSN plans is determined and output from the frequency planning tool.

The method and system as described above is advantageously used when frequency planning a radio network systems with IRC. The method and system as described herein enables improved and optimized performance in systems with IRC (e.g. EDGE Evolution) by a method where IRC capabilities are considered in the frequency assignment and AFP. As a result of an improved frequency plan, an operator of the radio system will achieve increased bitrates, better efficiency and higher capacity in the network.

**Claims**

1.  A method, performed by a device (100), for assigning frequencies in a cellular radio system where the cellular radio system is capable of Interference Rejection Combining, IRC, the method comprising:

    - collecting data (201) including IRC capabilities related to the cellular radio system;
    - assigning a cost (201) related to a number of interfering interferers;
    - executing a frequency optimization algorithm for determining an assigned reduced cost (201) in relation to the IRC capabilities and a level of interference; and
    - assigning frequencies (203, 205) based on the reduced assigned cost.

2.  The method according to claim 1, wherein Training Sequence Code, TSC, optimization (207, 209) is performed without reducing the assigned cost in relation to the IRC capabilities and the level of interference.

3.  The method according to any of claims 1 - 2, wherein the assigned cost for the number of interfering interferers imposes a cost if and only if the number of interferers is above some predetermined number.

4.  The method according to any of claims 1 - 3, when the cellular radio system comprises IRC with two antennas, the assigned cost for one dominant interferer is reduced.

5.  The method according to any of claims 1 - 3, when the cellular radio system comprises IRC with three antennas, the assigned cost for one or two dominant interferer is reduced.

6.  The method according to any of claims 1 - 5, wherein Training Sequence Code, TSC, optimization (207, 209) is performed after frequency optimization (203, 205) has been performed.

7.  A device (100) for assigning frequencies in a cellular radio system where the cellular radio system is capable of Interference Rejection Combining, IRC, the device (100) comprising:

    - means (101) for collecting data including IRC capabilities related to the cellular radio system;
    - means (101) for determining the IRC capabilities of the cellular radio system;
    - means (103) for assigning a cost related to a number of interfering interferers;
    - means (103) for executing a frequency optimization algorithm for determining an assigned reduced cost in relation to the IRC capabilities and a level of interference; and
    - means (105) for assigning frequencies based on the reduced assigned cost.

8.  The device (100) according to claim 7, further comprising means (105) adapted to perform Training Sequence Code, TSC, optimization without reducing the assigned cost in relation to the IRC capabilities and the level of interference.

9.  The device (100) according to any of claims 7 - 8, wherein means (103) adapted to impose that the assigned cost for the cost related to the number of interfering interferers imposes a cost if and only if the number of interferers is above some predetermined number.

10.  The device (100) according to any of claims 7 - 9, when the cellular radio system comprises IRC with two antennas, the device (100) comprising means (105) for reducing the assigned cost for one dominant interferer.

11.  The device (100) according to any of claims 7 - 9, when the cellular radio system comprises IRC with three antennas, the device (100) comprising means (105) for reducing the assigned cost for one or two dominant interferer.

12.  The device (100) according to any of claims 7 - 11, further comprising means (105) for performing Training Sequence Code, TSC, optimization (207, 209) after frequency optimization (203, 205) has been performed.

**Patentansprüche**

1. Verfahren zum Zuweisen von Frequenzen in einem zellulären Funksystem, das von einer Vorrichtung (100) ausgeführt wird, wobei das zelluläre Funksystem zur Interferenzunterdrückung durch Signalkombination (Interference Rejection Combining, IRC) in der Lage ist und das Verfahren Folgendes umfasst:

   - Sammeln von Daten (201), einschließlich IRC-Funktionalität in Bezug auf das zelluläre Funksystem;
   - Zuweisen von Kosten (201) in Bezug auf eine Anzahl von interferierenden Interferenzquellen;
   - Ausführen eines Frequenzoptimierungsalgorithmus zum Bestimmen von zugewiesenen reduzierten Kosten (201) in Bezug auf die IRC-Funktionalität und einen Interferenzpegel; und
   - Zuweisen von Frequenzen (203, 205) auf Basis der reduzierten zugewiesenen Kosten.

2. Verfahren nach Anspruch 1, wobei eine Trainingssequenzcode (TSC)-Optimierung (207, 209) ausgeführt wird, ohne die zugewiesenen Kosten in Bezug auf die IRC-Funktionalität und den Interferenzpegel zu reduzieren.

3. Verfahren nach einem der Ansprüche 1-2, wobei die zugewiesenen Kosten für die Anzahl von interferierenden Interferenzquellen dann und nur dann Kosten bewirken, wenn die Anzahl von Interferenzquellen über einer vorbestimmten Anzahl liegt.

4. Verfahren nach einem der Ansprüche 1-3, wobei die zugewiesenen Kosten für eine dominante Interferenzquelle reduziert sind, wenn das zelluläre Funksystem IRC mit zwei Antennen umfasst.

5. Verfahren nach einem der Ansprüche 1-3, wobei die zugewiesenen Kosten für eine oder zwei dominante Interferenzquellen reduziert sind, wenn das zelluläre Funksystem IRC mit drei Antennen umfasst.

6. Verfahren nach einem der Ansprüche 1-5, wobei eine Trainingssequenzcode (TSC)-Optimierung (207, 209) ausgeführt wird, nachdem eine Frequenzoptimierung (203, 205) ausgeführt wurde.

7. Vorrichtung (100) zum Zuweisen von Frequenzen in einem zellulären Funksystem, wobei das zelluläre Funksystem zur Interferenzunterdrückung durch Signalkombination (Interference Rejection Combining, IRC) in der Lage ist und die Vorrichtung (100) Folgendes umfasst:

   - Mittel (101) zum Sammeln von Daten einschließlich IRC-Funktionalität in Bezug auf das zelluläre Funksystem;
   - Mittel (101) zum Bestimmen der IRC-Funktionalität des zellulären Funksystem;
   - Mittel (103) zum Zuweisen von Kosten für eine Anzahl von interferierenden Interferenzquellen;
   - Mittel (103) zum Ausführen eines Frequenzoptimierungsalgorithmus zum Bestimmen von zugewiesenen reduzierten Kosten in Bezug auf die IRC-Funktionalität und einen Interferenzpegel; und
   - Mittel (105) zum Zuweisen von Frequenzen auf Basis der reduzierten zugewiesenen Kosten.

8. Vorrichtung (100) nach Anspruch 7, ferner umfassend Mittel (105), die zum Ausführen von Trainingssequenzcode (TSC)-Optimierung, ohne die zugewiesenen Kosten in Bezug auf die IRC-Funktionalität und den Interferenzpegel zu reduzieren, ausgebildet sind.

9. Vorrichtung (100) nach einem der Ansprüche 7-8, wobei die Mittel (103), die zum Bewirken ausgebildet sind, dass die zugewiesenen Kosten für die Kosten in Bezug auf die Anzahl von interferierenden Interferenzquellen dann und nur dann Kosten bewirken, wenn die Anzahl von Interferenzquellen über einer vorbestimmten Anzahl liegt.

10. Vorrichtung (100) nach einem der Ansprüche 7-9, wobei die Vorrichtung (100) Mittel (105) zum Reduzieren der zugewiesenen Kosten für eine dominante Interferenzquelle umfasst, wenn das zelluläre Funksystem IRC mit zwei Antennen umfasst.

11. Vorrichtung (100) nach einem der Ansprüche 7-9, wobei die Vorrichtung (100) Mittel (105) zum Reduzieren der zugewiesenen Kosten für eine oder zwei dominante Interferenzquellen umfasst, wenn das zelluläre Funksystem IRC mit drei Antennen umfasst.

12. Vorrichtung (100) nach einem der Ansprüche 7-11, ferner umfassend Mittel (105) zum Ausführen einer Trainingssequenzcode (TSC)-Optimierung (207, 209), nachdem eine Frequenzoptimierung (203, 205) ausgeführt wurde.

**EP 2 186 360 B1**

**Revendications**

1. Procédé, effectué par un dispositif (100), pour attribuer des fréquences dans un système de radiocommunications cellulaire où le système de radiocommunications cellulaire peut effectuer une combinaison de rejet d'interférence (IRC), le procédé comprenant :

   - la collecte de données (201), incluant des capacités IRC liées au système de radiocommunications cellulaire ;
   - l'attribution d'un coût (201) lié à un certain nombre de brouilleurs d'interférence ;
   - l'exécution d'un algorithme d'optimisation de fréquence pour déterminer un coût réduit attribué (201) par rapport aux capacités IRC et un niveau d'interférence ; et
   - l'attribution de fréquences (203, 205) sur la base du coût réduit attribué.

2. Procédé selon la revendication 1, dans lequel l'optimisation de code de séquence d'apprentissage (TSC) (207, 209) est effectuée sans réduire le coût attribué par rapport aux capacités IRC et au niveau d'interférence.

3. Procédé selon l'une quelconque des revendications 1 à 2, dans lequel le coût attribué pour le nombre de brouilleurs d'interférence impose un coût si et seulement si le nombre de brouilleurs est supérieur à un nombre prédéterminé.

4. Procédé selon l'une quelconque des revendications 1 à 3, lorsque le système de radiocommunications cellulaire comprend une IRC avec deux antennes, le coût attribué à un brouilleur dominant est réduit.

5. Procédé selon l'une quelconque des revendications 1 à 3, lorsque le système de radiocommunications cellulaire comprend une IRC avec trois antennes, le coût attribué à un ou deux brouilleurs dominants est réduit.

6. Procédé selon l'une quelconque des revendications 1 à 5, dans lequel l'optimisation de code de séquence d'apprentissage (TSC) (207, 209) est effectuée après qu'une optimisation de fréquence (203, 205) a été effectuée.

7. Dispositif (100), pour attribuer des fréquences dans un système de radiocommunications cellulaire où le système de radiocommunications cellulaire peut effectuer une combinaison de rejet d'interférence (IRC), le dispositif (100) comprenant :

   - des moyens (101) pour collecter des données incluant des capacités IRC liées au système de radiocommunications cellulaire ;
   - des moyens (101) pour déterminer les capacités IRC du système de radiocommunications cellulaire ;
   - des moyens (103) pour attribuer un coût lié à un certain nombre de brouilleurs d'interférence ;
   - des moyens (103) pour exécuter un algorithme d'optimisation de fréquence pour déterminer un coût réduit attribué par rapport aux capacités IRC et un niveau d'interférence ; et
   - des moyens (105) pour attribuer des fréquences sur la base du coût réduit attribué.

8. Dispositif (100) selon la revendication 7, comprenant en outre des moyens (105) conçus pour effectuer une optimisation de code de séquence d'apprentissage (TSC), sans réduire le coût attribué par rapport aux capacités IRC et au niveau d'interférence.

9. Dispositif (100) selon l'une quelconque des revendications 7 à 8, dans lequel des moyens (103) sont conçus pour imposer que le coût attribué pour le coût lié au nombre de brouilleurs d'interférence impose un coût si et seulement si le nombre de brouilleurs est supérieur à un nombre prédéterminé.

10. Dispositif (100) selon l'une quelconque des revendications 7 à 9, lorsque le système de radiocommunications cellulaire comprend une IRC avec deux antennes, le dispositif (100) comprenant des moyens (105) pour réduire le coût attribué pour un brouilleur dominant.

11. Dispositif (100) selon l'une quelconque des revendications 7 à 9, lorsque le système de radiocommunications cellulaire comprend une IRC avec trois antennes, le dispositif (100) comprenant des moyens (105) pour réduire le coût attribué pour un ou deux brouilleurs dominants.

12. Dispositif (100) selon l'une quelconque des revendications 7 à 11, comprenant en outre des moyens (105) pour effectuer une optimisation de code de séquence d'apprentissage (TSC) (207, 209) après qu'une optimisation de fréquence (203, 205) a été effectuée.

100

103

101

105

107

Fig. 1

201 — Modeling including dual carrier cost setting

203 — Frequency optimization

205 — Output analysis

207 — BSIC and TSC optimization

209 — Output analysis

211 — HSN optimization

213 — Output analysis

215 — Frequncy plan optimization

Fig. 2

**EP 2 186 360 B1**

**Patent documents cited in the description**

- WO 2002013439 A2